Europäisches Patentamt

European Patent Office

Office européen des brevets

(19)

(11) Numéro de publication : **0 071 884**
**B1**

(12) ## FASCICULE DE BREVET EUROPÉEN

(45) Date de publication du fascicule du brevet :
30.12.86

(51) Int. Cl.⁴ : **B 65 G   1/06**, B 65 G   1/04

(21) Numéro de dépôt : 82106827.7

(22) Date de dépôt : 28.07.82

(54) **Installation de stockage pour charges à fond rigide.**

(30) Priorité : 04.08.81 FR 8115127

(43) Date de publication de la demande :
16.02.83 Bulletin 83/07

(45) Mention de la délivrance du brevet :
30.12.86 Bulletin 86/52

(84) Etats contractants désignés :
**BE DE GB IT NL**

(56) Documents cités :
FR-A- 2 137 081
FR-A- 2 187 633
US-A- 3 583 584
US-A- 3 973 685

(73) Titulaire : **Société Industrielle d'Equipement Technique d'Appareils de Manutention SIETAM
42-48 Avenue du Président Kennedy
F-91170 Viry Chatillon (FR)**

(72) Inventeur : **Stenac, Jean-Paul
4 Rue Tardieu
F-75018 Paris (FR)**

(74) Mandataire : **Casalonga, Axel et al
BUREAU D.A. CASALONGA OFFICE JOSSE & PETIT
Morassistrasse 8
D-8000 München 5 (DE)**

EP 0 071 884 B1

Jouve, 18, rue St-Denis, 75001 Paris, France

## Description

Le stockage de produits finis ou en cours de fabrication pose essentiellement des problèmes d'encombrement et de manutention.

L'invention a pour but une installation réduisant au minimum l'espace occupé tout en permettant une manutention commode et automatique.

A cet effet, elle vise une installation de stockage du type « accumulation pour tous types de charges à fond rigide, comprenant divers éléments coopérant entre eux pour obtenir le résultat recherché, et qui sont essentiellement : une structure de stockage constituée d'éléments porteurs métalliques en forme d'échelles entretoisées par des poutrelles métalliques ou lisses, réalisant un volume de stockage à plusieurs niveaux, s'étendant selon au moins deux rayonnages parallèles séparés par une travée de circulation, chacun d'eux offrant une série parallèle de canaux de rangement ou de stockage ; un appareil élévateur pour amener les charges au niveau voulu ; un chariot transbordeur assurant la circulation des charges à partir du sol jusque dans les travées et équipé d'une table tournante ; un chariot automate recevant directement les charges, véhiculé par le chariot transbordeur et pouvant à partir des travées s'avancer à l'intérieur des canaux de stockage formés entre les niveaux des barreaux d'échelles ».

De façon plus particulière, chacun de ces constituants présente des caractéristiques spécifiques.

Ainsi, à l'intérieur des canaux de stockage, des rails de roulement et de guidage de l'automate servent également directement de support aux charges stockées, ce qui résout le problème des jeux à laisser entre l'automate et les charges ainsi qu'entre l'automate et la structure. Les lisses assemblant les échelles ensemble, situées du côté de la travée, sont aménagées en profilés creux servant de rails de roulement au chariot transbordeur.

Le chariot automate porte les charges aux extrémités de bras de fourche s'avançant en avant du chariot, ces bras pouvant prendre à la fois un mouvement de montée ou de descente combiné à un mouvement vers l'arrière ou vers l'avant, ce qui permet de prélever ou déposer les charges et les serrer les unes à la suite des autres.

On connaît déjà par le brevet US-3 583 584 une installation de stockage comportant, pour la circulation d'un chariot automate dans des travées, des rails formés par une paire au moins de profilés parallèles faisant partie intégrante d'une structure de stockage, les charges stockées étant reçues par d'autres rails.

On connaît également par le brevet FR-2 187 633 une installation de stockage dans laquelle des rails formés par au moins une paire de profilés parallèles servent à la fois à la circulation d'un chariot automate et au support des charges directement stockées sur ces rails.

Dans la solution préconisée par la présente invention, les rails sont en forme d'oméga renversé et supportent par leur fond les galets de roulement du chariot automate, qui est muni à l'avant d'une fourche articulée pour recevoir la charge et dont les bras sont eux-mêmes disposés à l'intérieur des ailes de l'oméga.

Cette solution permet de réaliser, en hauteur, un gain de place important et donc une capacité de stockage accrue, du fait que les galets de roulement roulent dans le fond des rails en oméga, que la charge repose sur quatre points d'appui formés par les ailes des oméga, ce qui permet aux plateaux de stockage d'avoir un encombrement minimal en hauteur, et enfin que les bras de la fourche sont logés à l'intérieur des oméga et qu'en conséquence le soulèvement de la charge s'effectue avec le moindre jeu possible au-dessus desdits rails en oméga.

Ainsi, de façon plus particulière, l'invention vise une installation de stockage pour tous types de charges à fond rigide comprenant essentiellement :

une structure de stockage constituée d'au moins deux rayonnages à étages, parallèles, séparés par une travée de circulation sur laquelle débouchent perpendiculairement les canaux de stockage des rayonnages ; un appareil élévateur ; un chariot transbordeur circulant dans la travée de circulation aux différents étages et pénétrant dans l'appareil élévateur ; un chariot automate portant directement les charges, muni de moyens pour les prélever et les déposer à l'emplacement voulu, ce chariot étant véhiculé par le chariot transbordeur dans la travée de circulation et dans l'appareil élévateur, et étant muni de moyens pour se déplacer lui-même à l'intérieur des canaux de stockage, le long des rails dont sont munis lesdits canaux (cette installation étant déjà connue de US-A-3 583 584) ; caractérisé par ceci que les rails sont en forme d'oméga renversé, et supportent par leur fond, les galets de roulement du chariot automate ; et le chariot automate est constitué d'un châssis muni desdits galets de roulement et comportant à l'arrière une structure contenant les différents organes moteurs et à l'avant, deux longerons horizontaux supportant une fourche articulée recevant la charge et dont les bras sont eux-mêmes disposés à l'intérieur des bras en oméga.

L'appareil élévateur est enfermé à l'intérieur d'une cage liée aux structures de stockage de telle façon que cette cage absorbe les efforts longitudinaux des voies de travée, cette cage servant à assurer par ailleurs le guidage et le portage d'une nacelle élévatrice du chariot.

Une telle installation est modulaire et extensible, elle permet d'augmenter le volume de stockage en hauteur, en longueur et en largeur, elle peut comporter un ou plusieurs élévateurs avec chacun un ou plusieurs chariots ; un chariot peut être affecté à chaque niveau, les entrées et les sorties se faisant respectivement en bout de travée par deux élévateurs différents.

Ces caractéristiques ainsi que d'autres apparaîtront d'après la description qui sera faite ci-après d'un exemple de réalisation représenté au dessin annexé dans lequel :

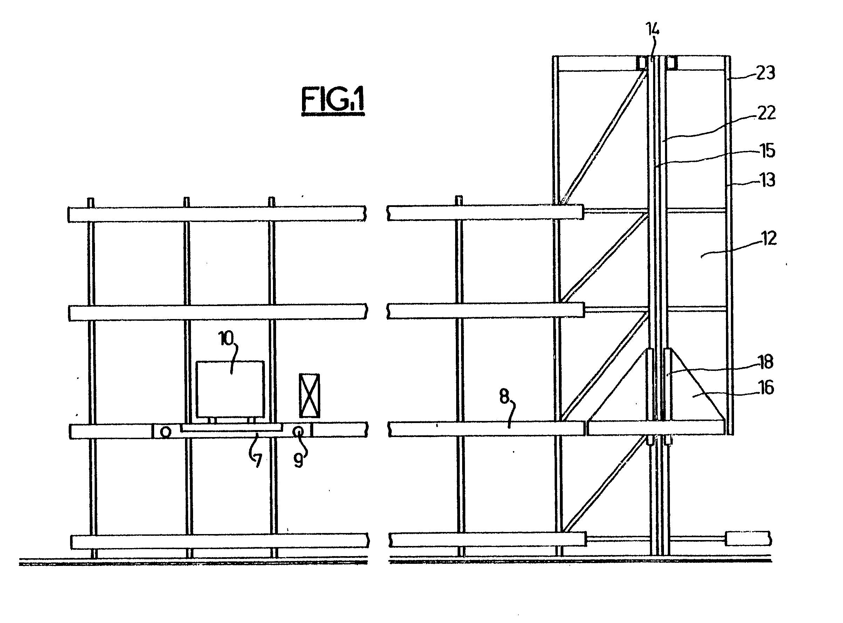

la figure 1 est une coupe en long en élévation de l'ensemble de l'installation ;

la figure 2 est une coupe transversale de l'installation de la figure 1 ;

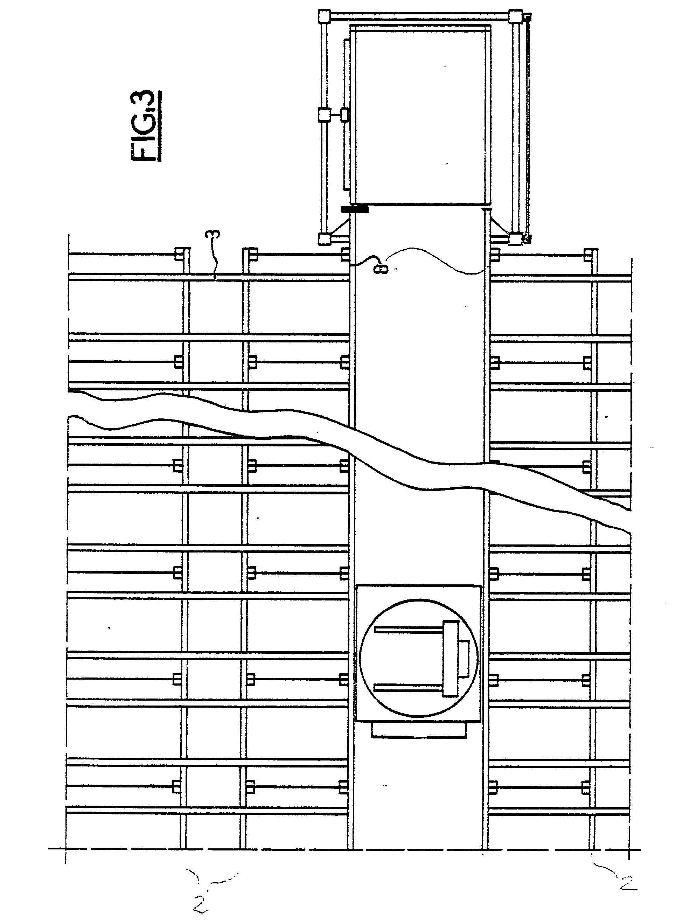

la figure 3 est une vue en plan de la structure de stockage ;

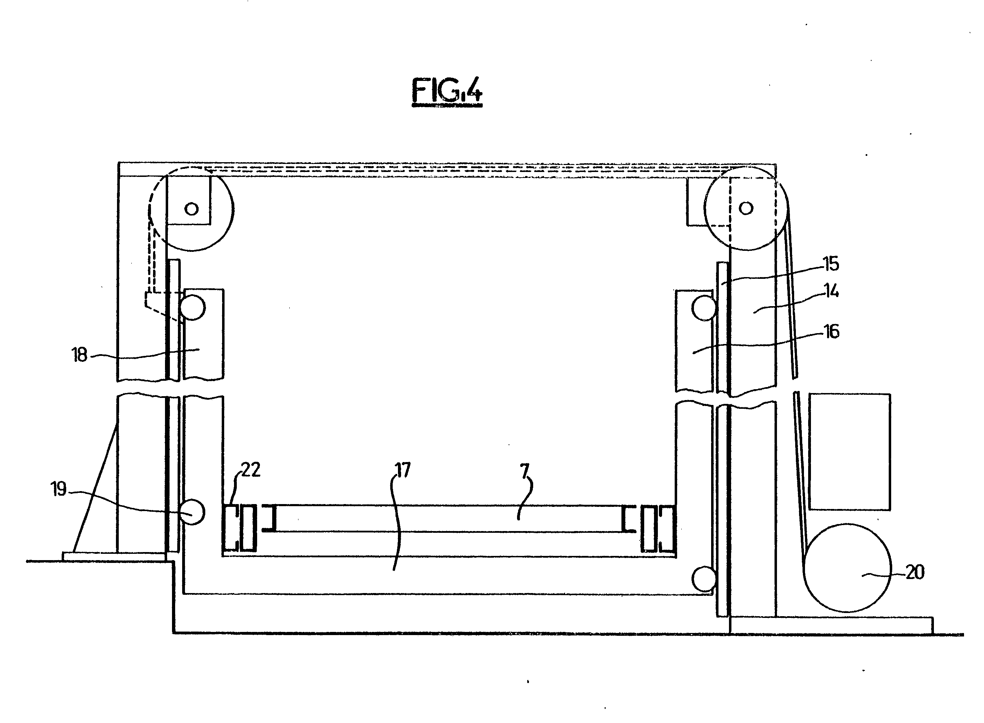

la figure 4 est une vue en coupe verticale discontinue de l'élévateur ;

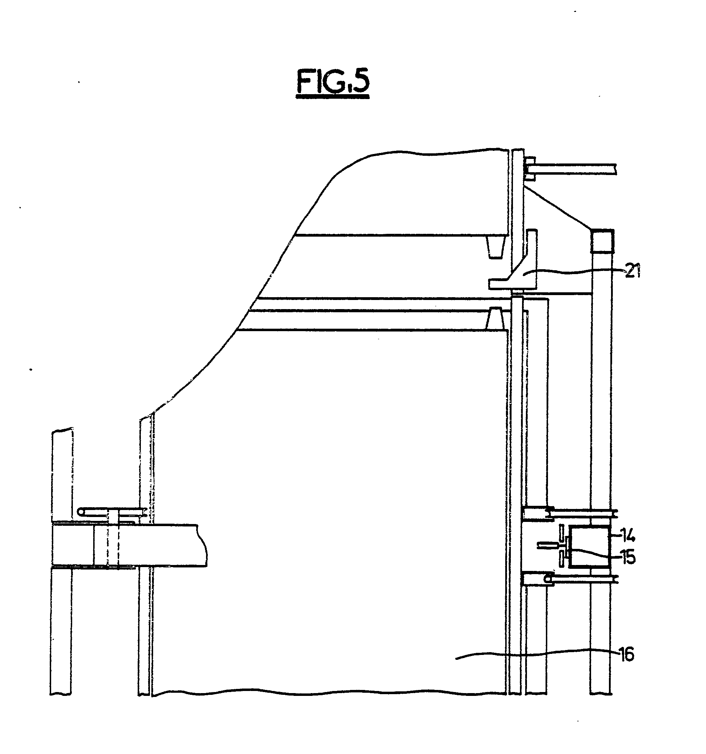

la figure 5 est une vue en plan partielle, de l'élévateur ;

la figure 6 est une coupe de détail du chariot transbordeur ;

la figure 7 est une vue en plan du chariot transbordeur et de la table tournante ;

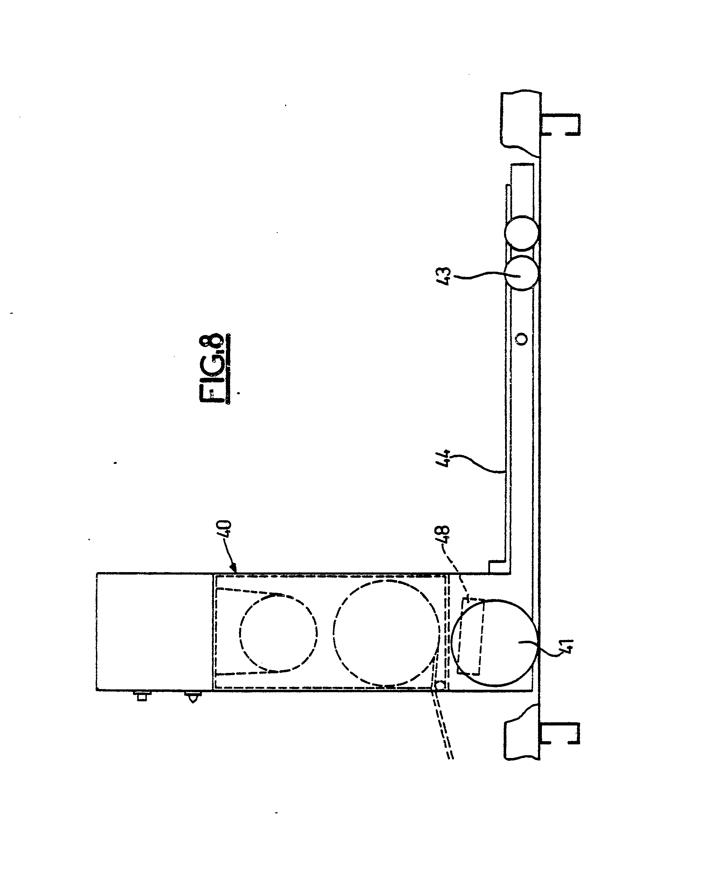

la figure 8 est une vue de côté du chariot automate ;

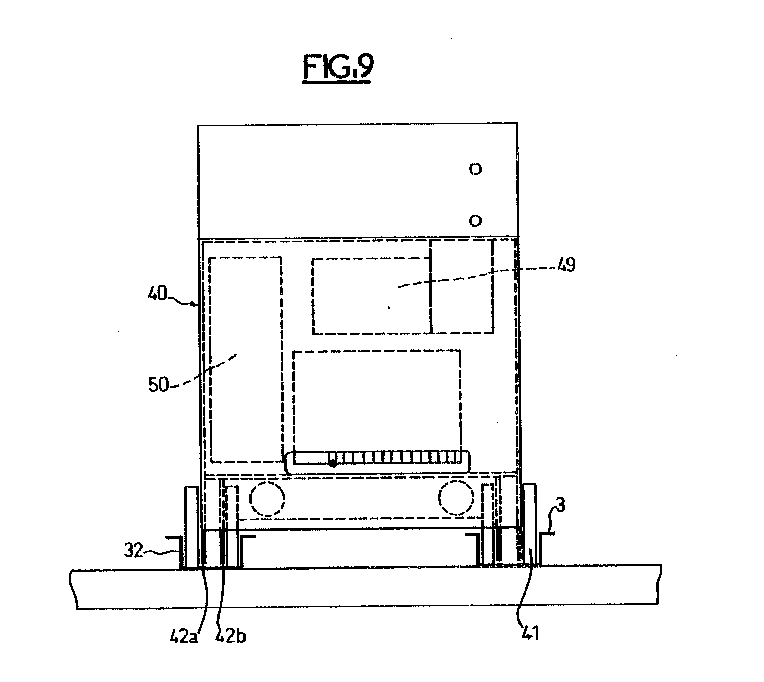

la figure 9 est une vue de l'arrière du chariot automate ;

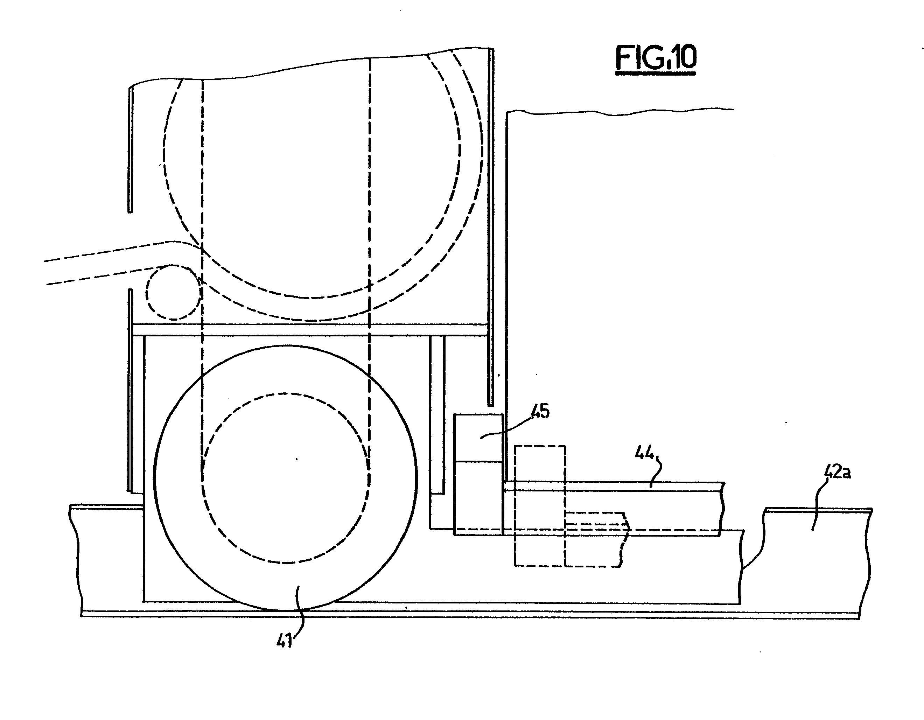

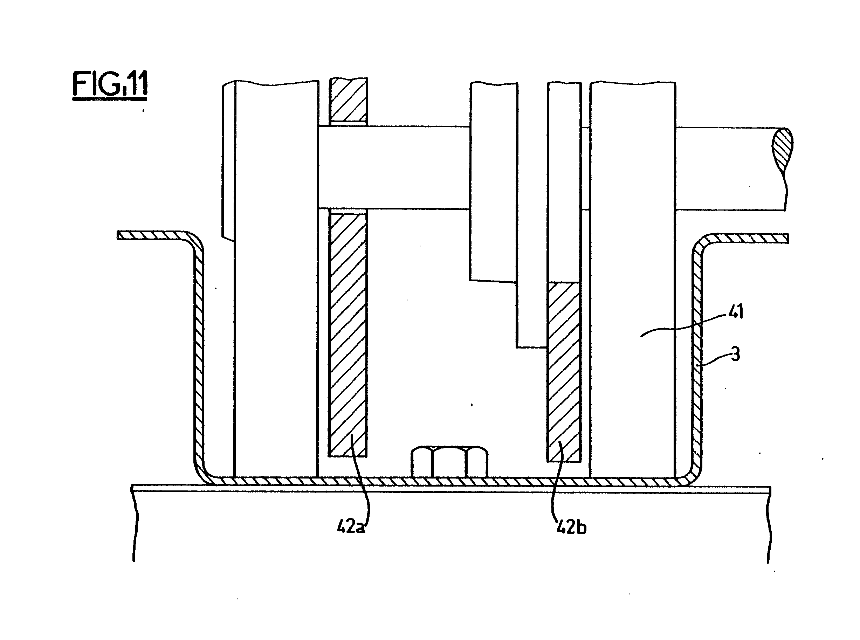

les figures 10 et 11 sont des vues de détail des figures 8 et 9 ;

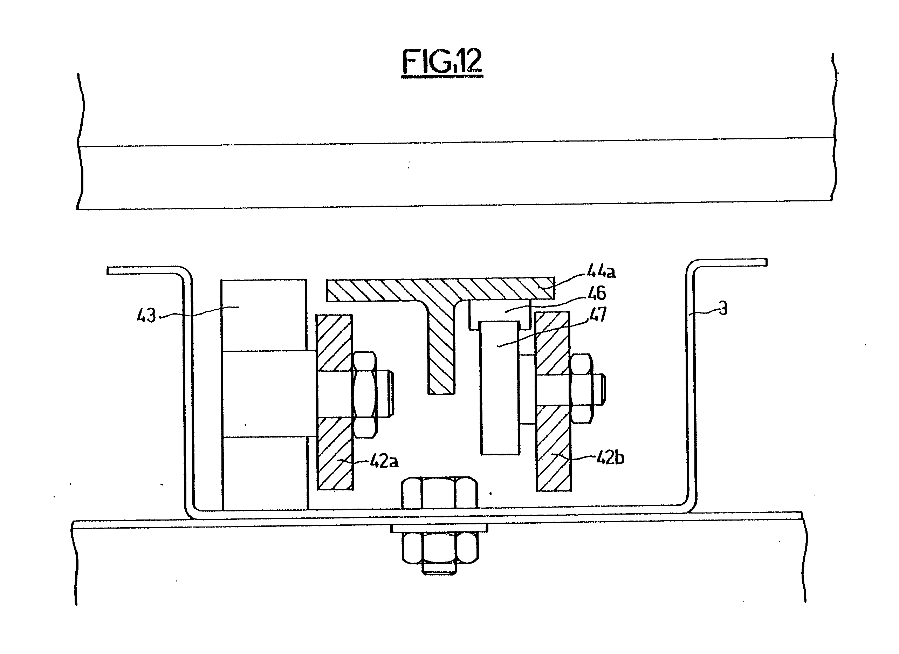

la figure 12 est une coupe d'un bras de fourche du chariot automate.

L'installation représentée comporte une structure de stockage formée d'une manière générale d'éléments plans, croisillonnés, en forme d'échelles 1, reliés entre eux par des poutrelles ou lisses 2. Chaque lisse 2 supporte des barreaux 3 qui forment des rails de roulement pour le chariot automate, ainsi que le support pour les palettes ou conteneurs de stockage, comme il sera indiqué plus loin, l'écartement des échelles correspondant à la largeur d'un canal de stockage.

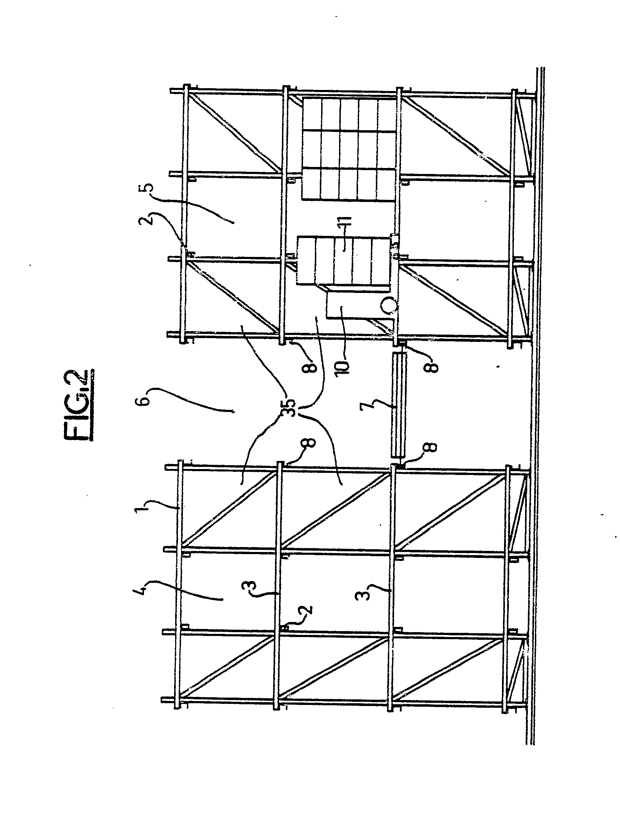

Comme le montre la figure 2, la structure comporte deux ensembles de rayonnage 4, 5 séparés par une travée 6 permettant la circulation d'un chariot transbordeur 7. Ce dernier est supporté entre deux lisses de bordure 8 formées par des profilés en U et dans lesquels s'engagent des galets de roulement 9.

Le chariot transbordeur reçoit le chariot automate 10 sur une fourche duquel la charge 11 est disposée. Le chariot 10 peut pénétrer à l'intérieur des canaux 35 pour déposer les palettes avec les charges, directement sur les barreaux 3, ou les reprendre.

La structure de stockage offre, ainsi qu'il est représenté, un certain nombre d'étages, les canaux 35 étant ainsi superposés.

Pour permettre l'accès du chariot transbordeur aux différents étages, la structure comporte un appareil élévateur 12 dont la cage 13 fait partie intégrante de la structure de stockage et coopère à sa stabilité.

Deux pylônes 14 portent chacun un rail de guidage 15 pour une nacelle 16 qui reçoit le chariot transbordeur.

La cage, de forme rectangulaire, réalisée par des montants verticaux entretoisés, est liée à chaque étage par des ferrures aux barreaux 3 formant les rails du chariot transbordeur et aux lisses 8, et elle en assure ainsi la stabilité longitudinale. La nacelle 16 comporte un plancher 17 soutenu par des montants 18 encadrant le rail 15. Des galets 19 portés par les montants assurent le guidage et le roulement. Un treuil 20 et son câble déplacent la nacelle pour l'amener au niveau désiré. La nacelle est munie de rails de guidage et de roulement 22 ayant le même profil que les lisses 8, de sorte qu'arrivé à l'étage le chariot transbordeur peut quitter la nacelle et s'engager dans la travée.

Au niveau d'entrée et de sortie des charges, niveau qui peut se trouver à un étage quelconque, la cage d'élévateur communique avec une piste d'accès et de sortie sur laquelle le chariot automate peut s'engager pour recevoir ou permettre le prélèvement des charges.

Une butée basculante 21 commandée par une came de l'élévateur permet de verrouiller le passage de la voie 8 lorsque la nacelle ne se trouve pas à son niveau.

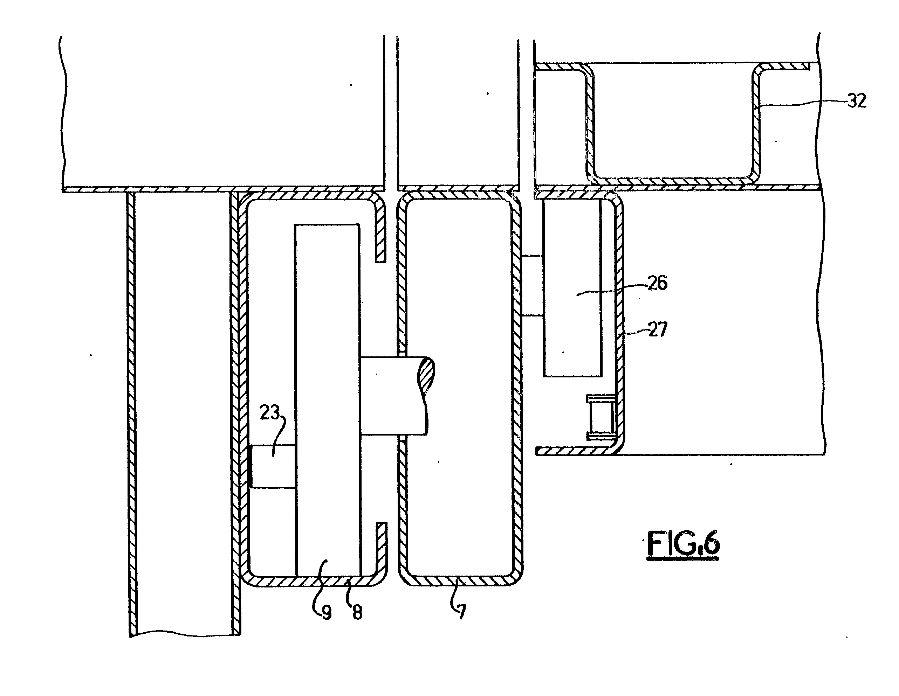

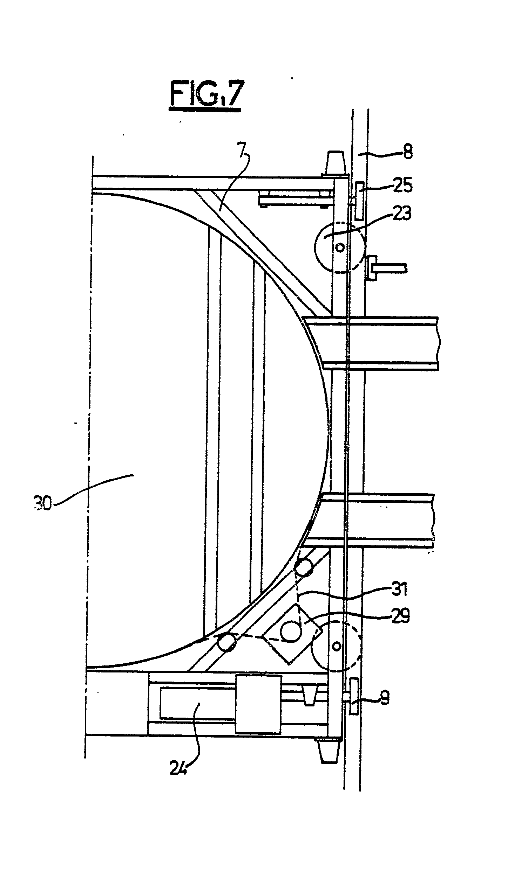

Les figures 6 et 7 montrent plus en détail la construction du chariot transbordeur 7 et de la table tournante qu'il porte. Le chariot 7 est constitué d'un châssis porteur des galets de roulement 9 circulant dans les lisses 8 fixées sur la structure de stockage, ainsi que des galets de guidage 23 prenant appui contre le fond du profilé 8. Les galets arrière 9 sont entraînés en rotation par un moteur 24, alors que les galets avant 25 sont montés fous. Le châssis du chariot 7, de forme générale carrée, porte par ailleurs la table tournante 30 par des galets 26 qui s'engagent dans un profilé 27 circulaire.

Le chariot 7 porte également un moteur 29 d'entraînement en rotation de la table tournante 30, par l'intermédiaire d'une chaîne sans fin 31. La table porte des rails 32 ayant même écartement et même profil que les barreaux 3, de sorte que le chariot automate peut passer des rails 32 sur les rails 3 pour pénétrer dans les canaux (35).

Les figures suivantes 8 à 12 sont plus particulièrement destinées à illustrer le chariot automate 10 sur lequel la charge est placée, à l'entrée de l'élévateur, et qui doit la déposer dans un canal de stockage sur les rails 3.

Ce chariot 10 est pourvu à l'arrière d'un coffret 40, et est muni à sa partie inférieure de galets de roulement 41 ; il comporte deux bras, s'étendant vers l'avant, constitués chacun de deux longerons parallèles 42a, 42b. Ces bras portent également des galets de roulement 43 et sont situés à l'intérieur du rail 3 en forme d'oméga. Entre les bras (42a, 42b) est située une fourche (44), plus particulièrement destinée à recevoir les charges. Cette fourche 44 est fixée à l'arrière sur un étrier 45, alors qu'à l'avant elle présente deux bras 44a, 44b formés par des profilés en T, s'avançant également à l'intérieur des rails 3 en forme d'oméga, chacun d'eux portant une came 46 coopérant avec un galet 47 porté par l'un des bras 42. Les bras de la fourche peuvent descendre alors en dessous du niveau des rails de roulement 3, de manière à y déposer la charge ou, au contraire, à passer en dessous de la charge pour la soulever.

Ce mouvement est commandé par un vérin 48 dont la tige est attelée à la fourche, de sorte que cette dernière, inclinée par rapport à l'axe du chariot, prend un mouvement d'avant en arrière ou inversement, combiné avec un mouvement de montée et descente entraîné par la came 46, dont le profil comporte deux hauteurs, la plus faible correspondant à la position basse de la fourche.

Enfin, le chariot porte un moteur 49 entraînant par une chaîne les galets de roulement 41, et un enrouleur de câble pour la liaison électrique avec le chariot transbordeur ; il porte également un groupe hydraulique 50, alimentant en liquide sous pression le vérin de levage.

Il est prévu également des palpeurs avant déterminant l'emplacement de la dernière palette ou charge en position de stockage, et commandant le mouvement d'arrêt du chariot et de commande du vérin.

L'ensemble est naturellement équipé d'organes et de commandes électriques nécessaires pour l'évolution du chariot transbordeur, de l'élévateur et du chariot automate ; il est commandé à partir d'un pupitre unique, généralement placé à l'entrée de l'élévateur, ou par un ordinateur.

Lorsqu'une charge à prendre en stock a été disposée devant l'élévateur, l'opérateur amène le chariot transbordeur (7) au niveau d'entrée et fait sortir le chariot automate (10) sur la rampe d'accès. Le chariot automate (10) reconnaît la charge et engage sa fourche (44) sous cette dernière, le chariot (10) s'arrête, inverse sa marche, la fourche (44) remonte, le chariot recule, s'engage à reculons sur le chariot transbordeur (7), l'élévateur (12) déplace ce dernier au niveau voulu. Pendant ce temps, la table tournante (30) fait opérer au chariot automate un demi-tour, puis le chariot transbordeur (7) s'engage sur les rails 8 à l'intérieur de la travée, pour s'arrêter devant le canal désiré. La table (30) opère un quart de tour à droite ou à gauche suivant le rayonnage prévu, et le chariot automate s'engage dans le canal sur les rails 3. Lorsque les palpeurs prennent connaissance d'un obstacle, charge déjà stockée au fond du canal, le chariot (10) s'arrête, la fourche (44) s'abaisse et dépose la charge. Le chariot (10) repart en arrière. Le chariot (10) s'engage à reculons sur la table tournante (30), où l'opération prend fin dans l'attente d'une nouvelle opération.

Comme il a été dit, les différents organes pour la commande et le pilotage des chariots n'ont pas été décrits, comme n'entrant pas dans le cadre de l'invention et, au surplus, faisant partie de la technique usuelle, l'invention visant essentiellement la structure de l'installation en coopération avec les deux chariots de transport.

## Revendications

1. Installation de stockage pour tous types de charges à fond rigide, comprenant essentiellement : une structure (4, 5) de stockage constituée d'au moins deux rayonnages (4, 5) à étages, parallèles, séparés par une travée de circulation (6) sur laquelle débouchent perpendiculairement les canaux (35) de stockage des rayonnages ; un appareil élévateur (12) ; un chariot transbordeur (7) circulant dans la travée (6) de circulation aux différents étages et pénétrant dans l'appareil élévateur (12) ; un chariot automate (10) portant directement les charges (11), muni de moyens pour les prélever et les déposer à l'emplacement voulu, ce chariot (10) étant véhiculé par le chariot transbordeur (7) dans la travée (6) de circulation et dans l'appareil élévateur (12), et étant muni de moyens pour se déplacer lui-même à l'intérieur des canaux de stockage (35), le long des rails (3) dont sont munis lesdits canaux (35) ; caractérisé par ceci que les rails (3) ont une section transversale en forme d'oméga renversé, et supportent par leur fond, les galets de roulement (41, 43) du chariot automate (10) ; et le chariot automate (10) est constitué d'un châssis muni desdits galets de roulement (41, 43) et comportant à l'arrière une structure (40) contenant les différents organes moteurs et à l'avant, deux longerons (42a, 42b) horizontaux supportant une fourche (44) articulée recevant la charge et dont les bras (44a, 44b) sont eux-mêmes disposés à l'intérieur des rails en oméga (3).

2. Installation de stockage selon la revendication 1, caractérisée par ceci que les rails (3) en oméga constituent une surface à doubles paires d'ailes, et ainsi à quadruples surfaces d'appui, pour le fond rigide d'une charge.

3. Installation de stockage selon la revendication 1, caractérisée par ceci que le chariot transbordeur (7) comporte une table tournante (30) ayant également des rails en forme d'oméga pour recevoir le chariot automate.

4. Installation de stockage selon la revendication 1, caractérisée par ceci que les rails (3) font partie intégrante de la structure de stockage.

5. Installation selon les revendications 1, 2 et 3, caractérisée par ceci que le chariot automate (10) comporte des organes pour actionner la fourche (44) articulée du support de charge, ces organes comprenant un vérin (48) susceptible de provoquer un mouvement de la fourche parallèlement à elle-même, de haut en bas et d'arrière en avant et vice versa, la fourche étant maintenue à l'avant par des cames (46) reposant sur des galets (47) solidaires des longerons (42a, 42b).

6. Installation selon l'une quelconque des revendications 1, 3 ou 4 avec chariot automate, dans laquelle les longerons (42a, 42b) du chariot automate (10) et les bras de la fourche mobile sont disposés à l'intérieur du profilé servant de rail aux galets de roulement (41, 43), les bras de fourche pouvant s'élever au-dessus dudit rail (3) ou s'abaisser à l'intérieur de ce dernier, pour permettre de déposer une charge sur ces rails ou s'engager en dessous pour en permettre le soulèvement.

## Claims

1. Storage installation for all types of loads having a rigid bottom, comprising essentially : a storage structure (4, 5) consisting of at least two parallel multistorey sets of racks separated by a circulation bay (6) onto which the storage channels (35) of the racks lead at right angles ; an elevating apparatus (12) ; a transfer truck (7) circulating in the circulation bay at the different storeys and penetrating into the elevating apparatus (12) ; an automaton truck directly carrying the loads (11) and provided with means for picking them up and depositing them in the desired position, this truck (10) being carried by the transfer truck (7) in the circulation bay (6) and in the elevating apparatus (12) and being provided with means for its own movement inside storage channels (35) along rails (3) with which said channels (35) are provided ;

characterized in that the rails (3) have an inverted omegashaped cross-section and by their bottom support the running rollers (41, 43) of the automaton truck (10) ; and the automaton truck (10) is composed of a frame provided with said running rollers (41, 43) and comprising at the rear a structure (40) containing the different drive members and at the front two horizontal longitudinal members (42a, 42b) supporting an articulated fork (44) which receives the load and whose arms (44a, 44b) are in turn disposed inside the omega-shaped rails (3).

2. Storage installation according to Claim 1, characterized in that the omega-shaped rails constitute a surface having double pairs of flanges and also quadruple support surfaces for the rigid bottom of a load.

3. Storage installation according to Claim 1, characterized in that the transfer truck (7) is provided with a turntable also having omega-shaped railsfor receiving the automaton truck.

4. Storage installation according to Claim 1, characterized in that the rails (3) form an integral part of the storage structure.

5. Installation according to Claims 1, 2 and 3, characterized in that the automaton truck (10) is provided with means of actuating the articulated fork (44) of the load support, these means comprising a jack (48) adapted to effect a movement of the fork parallel to itself from top to bottom and from rear to front, and vice versa, the fork being held at the front by cams (46) resting on rollers (47) fastened to the longitudinal members (42a, 42b).

6. Installation according to any one of Claims 1, 3 or 4 which has an automaton truck and in which the longitudinal members (42a, 42b) of the automaton truck (10) and the arms of the movable fork are disposed inside the sectional member serving as rail for the running (41, 43), the fork arms being adapted to be raised above said rail (3) or to be lowered inside the latter in order to enable a load to be deposited on the rails or to engage underneath to enable it to be raised.

**Patentansprüche**

1. Lagereinrichtung für Lasten aller Art mit starrem Boden, enthaltend im wesentlichen eine Lagerkonstruktion (4, 5) bestehend aus mindestens zwei parallelen mehrstöckigen Lagerregalen (4, 5), die durch einen Zwischengang (6) getrennt sind, in den die Lagerkanäle (35) der Lagerregale rechtwinklig einmünden, einen Aufzug (12) ; einen Umlagewagen (7), der sich in dem genannten Zwischengang (6) in den unterschiedlichen Stockwerken bewegt und in den Aufzug (12) einfährt ; einen automatischen Wagen (10), der ummittelbar Lasten (11) trägt und mit Mitteln versehen ist, um diese aufzunehmen und an einem gewünschten Platz abzulegen, wobei der genannte Wagen (10) von dem Umlagewagen (7) in den Zwischengang (6) und in den Aufzug (12) befördert wird und mit Mitteln versehen ist, um sich seinerseits innerhalb der Lagerkanäle (35) zu bewegen entlang von Schienen, mit denen die genannten Kanäle (35) ausgestattet sind ;

dadurch gekennzeichnet, daß die Schienen (3) im Querschnitt die Form eines umgekehrten Omega haben und auf ihrem Boden die Laufrollen (41, 43) des automatischen Wagens (10) aufnehmen ; und der automatische Wagen (10) aus einem Rahmen besteht, der mit den genannten Laufrollen (41, 43) versehen ist und nach hinten eine Konstruktion (40) trägt, die die verschiedenen Antriebsorgane enthält, und nach vorne zwei Längsträger (42a, 42b) trägt, die eine Gelenkgabel (42) aufweisen, die die Last aufnimmt und deren Arme (44a, 44b) innerhalb der Schienen (3) in Omegaform angeordnet sind.

2. Lagereinrichtung gemäß Anspruch 1, dadurch gekennzeichnet, daß die Schienen (3) in Omegaform eine Fläche mit zwei Flügelpaar und daher mit vierfachen Auflageflächen für den starren Boden einer Last darstellen.

3. Lagereinrichtung gemäß Anspruch 1, dadurch gekennzeichnet, daß der Umladewagen (7) eine Drehscheibe (30) aufweist, die ebenfalls mit Schienen im Omegaform ausgerüstet ist, um den automatischen Wagen aufzunehmen.

4. Lagereinrichtung gemäß Anspruch 1, dadurch gekennzeichnet, daß die Schienen (3) fester bestandteil der Lagerkonstruktion sind.

5. Lagereinrichtung gemäß den Ansprüchen 1, 2 und 3, dadurch gekennzeichnet, daß der automatische Wagen (10) Organe trägt, um die Gelenkgabel (44) zu betätigen, wobei diese Organe einen Stellzylinder (48) umfassen, der der Gabel eine Bewegung parallel zu ihr selbst von oben nach unten und von hinten nach vorne und umgekehrt erteilt, wobei die Gabel vorne von Nocken (46) getragen wird, die auf fest mit den genannten Längsträgern (42, 42b) verbundenen Rollen ruhen.

6. Einrichtung gemäß einem beliebigen der Ansprüche 1, 3 oder 4, mit einem automatischen Wagen, in der die Längsträger (42a, 42b) des automatischen Wagens (10) und die Arme der beweglichen Gabel innerhalb der Profilschiene angeordnet sind, die den Laufrollen (41, 43) als Schiene dient, wobei die Gabelarme über die genannte Schiene (3) hinaus nach oben anhebbar oder in deren Inneres absenkbar sind, um eine Last auf diesen Schienen abzusetzen, oder unterhalb der Last einfahrbar sind, um diese zu heben.

# FIG.1

0 071 884

FIG.2

0 071 884

FIG.3

FIG.4

0 071 884

# FIG.5

FIG.6

0 071 884

# FIG. 7

FIG.8

40

48

44

43

41

0 071 884

# FIG.9

0 071 884

FIG.10

0 071 884

FIG.11

41

3

42a

42b

0 071 884

FIG.12